# EUROPEAN PATENT APPLICATION

(11) **EP 1 675 049 A2**
(43) Date of publication of application: **28.06.2006**
(21) Application number: 05027294.7
(22) Date of filing: 14.12.2005
(51) Int. Cl.: G06Q 10/00

(54) **Electronic communications content elaboration assistant**

(30) Priority: 27.12.2004 US 23265
(71) Applicant: Alcatel, 75008 Paris (FR)
(72) Inventor: Rao, Kashipati G., Plano, TX 75025 (US); Suhail, Atiya, Plano, TX 75025 (US)
(74) Representative: Schäfer, Wolfgang

(57) **Abstract**

A communications system (10). The system comprises circuitry (12) for receiving a communication. The system also comprises circuitry (16, 20), responsive to the communication, and for selectively locating elaborating information corresponding to content in the communication. The system also comprises circuitry (14) for presenting to a user a form of the elaboration.

## Description

### BACKGROUND OF THE INVENTION

The present embodiments relate to electronic communications and are more particularly directed to an automated assistant for elaborating on communicated content.

Electronic communication of information has vastly affected society and will likely continue to do so in the future. One key example is the convergence of telephony and computing, another is the global Internet, and still others are portable wireless devices, such as mobile telephones, personal digital assistants ("PDAs"), and hybrids of these two devices. With these and other manners of communicating, mechanisms such as voice calls, voice-over-IP ("VoIP"), email, instant messaging ("IM"), text messaging, and others are now tools for a person to communicate with one or more other persons. Thus, information is much more readily available for all sorts of uses, whether they are business, personal, institutional, or others. As a result, perhaps information is more extensive and more rapidly presented to a person as opposed to that which occurred just a handful of years ago.

With the amount of information available to a person, certain electronic tools are in the marketplace to further explore or decipher such information. Thus, if someone needs to find information on a topic, that person may manually input search terms into a separate internet search engine application or may look them up in an on-line or standalone dictionary or acronym search tool. Accordingly, with these tools, a person may more readily acquaint themselves with additional detail pertaining to an acronym, word, or subject matter.

While the preceding technologies have advanced the state of the art for information exchange and elaboration, the present inventors have recognized that still further developments may improve such advancements. Such developments are discussed below in connection with the

### preferred embodiments.

### BRIEF SUMMARY OF THE INVENTION

In one preferred embodiment, there is a communications system. The system comprises circuitry for receiving a communication. The system also comprises circuitry, responsive to the communication, and for selectively locating elaborating information corresponding to content in the communication. The system also comprises circuitry for presenting to a user a form of the elaboration.

Other aspects are also described and claimed.

### BRIEF DESCRIPTION OF THE SEVERAL VIEWS OF THE DRAWING

Figure 1 illustrates a block diagram of a system 10 according to the preferred embodiments.
Figure 2 illustrates a flowchart method 30 depicting the general operation of system 10 of Figure 1.
Figure 3 illustrates an example of the application of method 30.

### DETAILED DESCRIPTION OF THE INVENTION

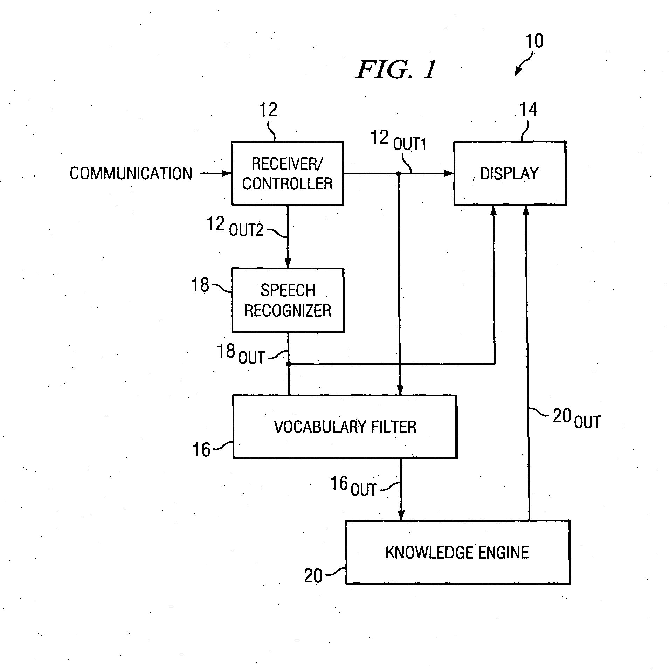

Figure 1 illustrates a block diagram of a system 10 according to the preferred embodiments. By way of introduction, each block of system 10 is shown to represent certain respective functionality described below, with certain connectivity also shown to depict the interrelationship of such functionalities. However, these illustrations are not intended to be limiting as one skilled in the art will appreciate that each described function may be embodied in various fashions, such as in hardware, software, or a combination thereof, and certain functions may be combined or separated in manners other than that shown. Moreover, various aspects of the blocks of system 10 may exist in certain devices, where those aspects may be supplemented so as to achieve the full functionality provided below.

System 10 of Figure 1 works in response to receiving a communication as shown generally in the Figure. For reasons appreciated later, such a communication is intended to be any one of various types of communications that may be communicated in electronic format, either analog or digital, and therefore including by ways of example, voice and data communications via telephone as well as network and other electronic communications (e.g.,local networks and larger scale networks including the global Internet). The network communications may take various forms, including voice-over-IP ("VoIP"), email, instant messaging ("IM"), text messaging, as well as custom communications solutions. Indeed, by way of example to the latter, reference is made to U.S. patent application 10/962,792, filed October 12, 2004, and U.S. patent application 10/962,773, also filed October 12, 2004, both of which are hereby incorporated herein by reference. In any event, the communication is received by a receiver/controller 12 via an appropriate interface (e.g.,wired or wireless), where receiver/controller 12 is part of system 10, which is anticipated as included in a device for a user to receive such a communication such as in the form of a telephone, PDA, hybrid, terminal, computer, computing device, electronic handheld device, or the like, as further appreciated below.

Looking to the connectivity and blocks within system 10, receiver/controller 12 has an output 12_{OUT1} connected to a display 14 and to a vocabulary filter 16, and an output 12_{OUT2} connected to a speech recognizer 18. Speech recognizer 18 has an output 18_{OUT} connected to display 14 and to vocabulary filter 16. Vocabulary filter 16 has an output 16_{OUT} connected to a knowledge engine 20, and knowledge engine 20 has an output 20_{OUT} connected to display 14.

An introduction is now provided to the functionality of the various blocks of system 10, with additional detail provided later in connection with the preferred embodiment methodology of the operation of system 10. Receiver/controller 12 operates to receive a communication and to process it consistent with the signal type of communication, such as whether the signal is in analog or digital format. In a traditional manner known in the art, if the signal is already in, or processed to create, a digital form that may be translated to a visual counterpart (e.g., text received in the communication), then receiver/controller 12 provides that form via output 12_{OUT1} to display 14, and display 14 then displays the communication in visual form to the user of system 10; at the same time, the information of that form is provided to vocabulary filter 16. If the received information is a signal, such as a voice signal, that does not immediately lend itself to being displayed, then such a signal is communicated via output 12_{OUT2} to speech recognizer 18, which converts that signal to a displayable format, and that format is provided via output 18_{OUT} to display 14, for display of the converted communication in a visual form to the user of system 10, and that form is also provided to vocabulary filter 16. Looking to vocabulary filter 16, therefore, it receives either directly recognizable digital data from output 12_{OUT1} or converted data from speech recognizer 18 via output 18_{OUT}. In either case, therefore, it is anticipated that a signal received by vocabulary filter 16 is in a form whereby it represents an alphanumeric communication, meaning a word, words, alphanumeric characters, acronyms, and the like. With this input, vocabulary filter 16 evaluates, from pre-programming detailed later, whether the particular alphanumeric communication is one in which the user of system 10 desires, or would benefit from, further elaboration pertaining to that alphanumeric communication; if so, then filter 16 issues a control signal and the communication, via output 16_{OUT}, to knowledge engine 20. Knowledge engine 20 represents either or both a data store and a search engine (or engines) that is able to elaborate on the alphanumeric communication, either by already having access to that information or by electronically obtaining it. Once such information is available to knowledge engine 20, it communicates it to display 14, where the elaboration is then displayed to the user of system 10. Various of these aspects are further explored below.

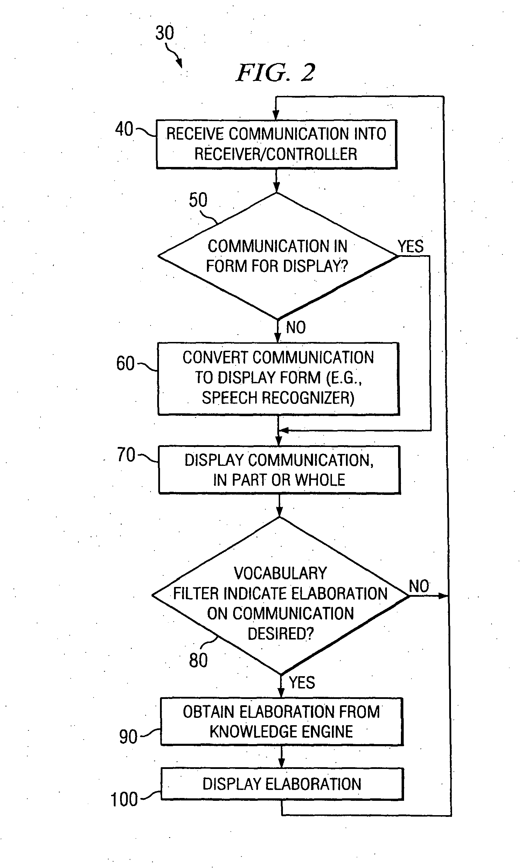

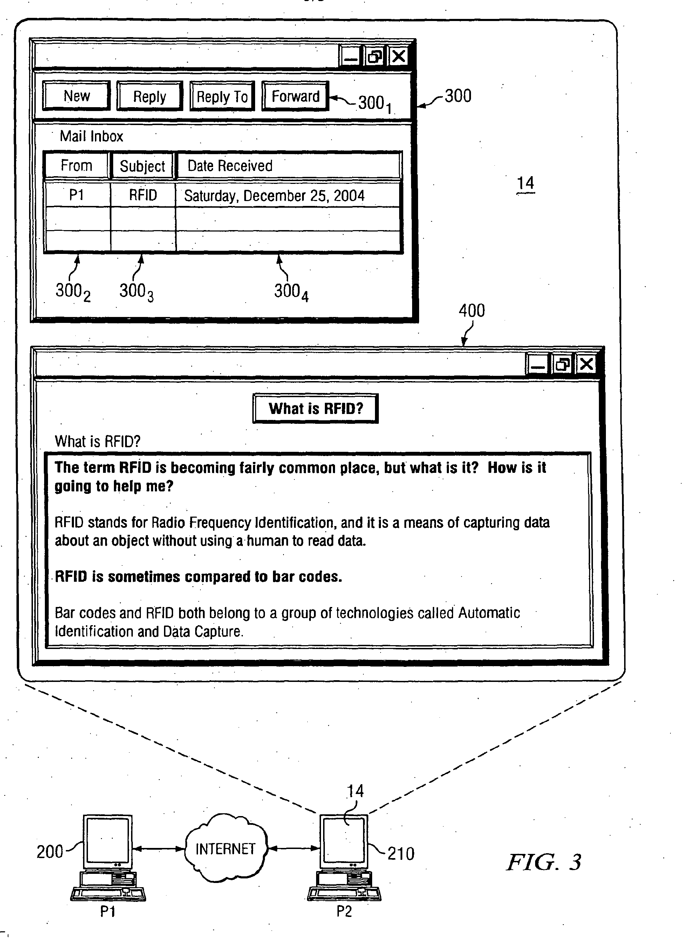

Figure 2 illustrates a flowchart method 30 depicting the general operation of system 10 of Figure 1, and Figure 3 illustrates an example of the application of method 30. By way of introduction, note that method 30 in the preferred embodiment may be disabled, so that a recipient as described below may disable the method and conduct communications per the prior art should such a person not desire the assistance of method 30. However, assuming that person has elected to enable method 30 of system 10, then method 30 proceeds as follows. In the example of Figure 3, assume that person P1 is sending an alphanumeric communication via a computing device 200 to person P2, where in the example of Figure 3 that communication is email across the Internet and to a computing device 210 used by person P2. Moreover, assume in the Figure 3 example that computing device 210 includes sufficient hardware and/or software to implement system 10 and to perform the steps of method 30 (which is enabled in the example), and such hardware and/or software may be readily ascertained by one skilled in the art given the teachings of this document. Lastly, Figure 3 includes an expanded view of display 14 from system 10, which is understood to correspond to the display device 14 (e.g., monitor or display) of computing device 210.

Looking now to Figures 2 and 3, in Figure 2 and step 40, receiver/controller 12 of computing device 210 awaits and then receives the communication from person P1 via the Internet. In the present example, person P1 communicates that communication, an email, via computing device 200, which is capable of transmitting such a communication.
Next, method 30 continues from step 40 to step 50.

In step 50 of Figure 2, receiver/controller 12 determines whether the received communication is in a form that is capable of display, such as an image or alphanumeric data, which then can be passed though a proper interface and processed by a video card, if needed, or the display itself. In the example of Figure 3, the communication is an e-mail and therefore, using known principles, the email is a digitally transmitted alphanumeric representation which is readily presentable to a display. As such, step 50 is answered in the affirmative and method 30 continues from step 50 to step 70. Note, however, had the communication not been readily presentable to a display, such as in the case of a voice communication, then method 30 would continue from step 50 to step 60, in which case that communication is converted to a displayable form. To achieve this in the case of a voice communication, speech recognizer 18 converts the speech to alphanumeric form, thereby rendering it presentable to a display. Thereafter, therefore, method 30 continues from step 60 to step 70.

In step 70, display 14 displays the communication, and in the example of Figure 3 the communication is displayed to person P2. Note that the display may be of only part or all of the communication as issued by person P1. For example, in connection with the above-incorporated patent applications, the transmitted communication may be an entire message along with a subject matter line, and initially only the subject matter line might be displayed. Similarly, in an email environment, a viewing pane might display only a portion of a larger email communication or just a subject line corresponding to the email communication. In any event, following the step 70 display operation, method 30 continues from step 70 to step 80.

In step 80, vocabulary filter 16 determines whether elaboration is desired for any part of the received communication. In this regard, in the preferred embodiment, vocabulary filter 16 is used to examine received content such that, either: (i)vocabulary filter 16 includes a listing of content for which elaboration is not desired, thereby excluding such content from provoking a further elaboration of that content; or (ii)vocabulary filter 16 includes a listing of content for which elaboration is desired, thereby including content for which further elaboration of that content is desired. These two options are further appreciated below. In any case, if step 80 is answered in the affirmative, that is, elaboration is desired, then method 30 continues from step 80 to step 90. On the other hand, if step 80 is answered in the negative, that is, elaboration is not desired, then method 30 returns from step 80 to step 40.

In step 90, having been reached because further elaboration is desired with respect to certain content of the communication, then such elaboration is obtained from knowledge engine 20. In this regard, recall that knowledge engine 20 represents either or both a data store and a search engine (or engines) that is able to elaborate on the communication, either by already having access to that information or by electronically obtaining it. To first demonstrate this operation, looking to Figure 3, display 14 is shown to display, to person P2, two windows 300 and 400. Window 300 is a typical email program window, with an options line 300₁ as well a "From" field 300₂, a "Subject" field 300₃, and a "Date received" field 300₄; of course, such fields are only by ways of example and various alterations may exist or be used. In any event, in the Figure 3 example, it may be seen that person P2 has received, from person P1, a message pertaining to the subject of what is represented in the present example by an acronym, "RFID." Returning briefly to step 80, then, in the present example it is assumed that vocabulary filter 16 determined that this communication, including the content of "RFID," is a subject matter for which person P2 desired additional elaboration. For example, assume that vocabulary filter 16 is a filter by exclusion, meaning that matters it lists are not further elaborated upon, and assume further that "RFID" was not in the filter; as a result, then the flow continued to step 90 such that elaboration was sought. As a result, in step 90, knowledge engine 20 is consulted by searching on part of the content in the communication to determine if it contains elaboration on that content, which in the present example would be a search based on "RFID" to determine if such an elaboration is already immediately available in computing device 210 used by person P2, such as being stored in a local table or database. For example, computing device 210 may include some type of indexing software that periodically or constantly updates the subject matter knowledge within knowledge engine 20. Moreover, if the elaboration on the meaning of "RFID" is not immediately available in computing device 210, then step 90 performs an automatic search using content from the communication for such an elaboration, where the search is to resources not locally stored in computing device 210, but instead via a network to other resources external from computing device 210. For example, this search may be achieved using one or more of the various available Internet search engines (e.g., Google, Yahoo) or with a proprietary search engine. In any event, by the conclusion of step 90, the elaboration on the content at issue (e.g., "RFID") is available to knowledge engine 20. Next, method 30 continues from step 90 to step 100.

In step 100, method 30 displays the content elaboration identified in step 100. As an example, in Figure 3, display 14 also depicts, consistent with the preferred embodiments, window 400 which displays in at least alphanumeric form the elaboration information identified in step 90. In the present example, therefore, additional details are provided to person P2 as to the meaning of "RFID," where that acronym was identified by system 10 from the Subject field 300₃ of person P1's email to person P2. As a result, person P2 is automatically apprised of additional information pertaining to certain subject matter, which in the present example is the meaning of "RFID."

From the preceding, one skilled in the art should appreciate that the preferred embodiments operate to provide an automated and real-time content elaboration system 10. With these demonstrations, various observations are noteworthy. As one observation, consider again the preferred programmability of vocabulary filter 16. Specifically, in the preferred embodiment, periodically a user of system 10 may update that filter so as to adjust the subject matters on which future elaboration is desired. Thus, if filter 16 works on exclusion, then as person P2 becomes familiar with certain subject matters, he or she may program those subject matters into filter 16 so that in future instances, when that subject matter is received by system 10, such subject matter will not provoke a display of elaboration on that subject matter. As another observation, note that filter 16 may be adjusted real-time, such as by having the user of system 10 single click on a received subject matter, whereby that subject matter is then added to filter 16. As still another observation, system 10 may be applied to numerous types of communications. While the example of Figure 3 illustrates system 10 as applied to email, system 10 may apply to other communications, including but not limited to telephony where displays are able to display the content communicated via the telephony, and also VoIP, IM, and text messaging. Thus, in any environment where a person receives a communication having a corresponding aspect that may be displayed, such as text, symbols, acronyms, words, phrases, or other subject matters, the preferred embodiment may operate to determine whether additional elaboration is desired with respect to any part or whole of the communication. If elaboration is desired, the preferred embodiments provide such elaboration very quickly to the recipient person and without that person having to take numerous steps to manually seek such elaboration. Thus, the recipient person is more readily familiarized with the content of the communication, thereby facilitating an improved level of response from the recipient.

The following features, separately or in any combination, may also constitute advantageous embodiments of the described or claimed invention:
- The claimed and/or described communications system wherein the network comprises the global Internet;
- The claimed and/or described communications system wherein the circuitry for selectively locating elaborating information selectively locates the elaborating information and retrieves it into a local storage prior to receipt of the communication;
- The claimed and/or described communications system wherein the communication is selected from a set consisting of text, symbols, acronyms, words, and phrases;
- The claimed and/or described communications system wherein the circuitry for presenting comprises a display;
- The claimed and/or described communications system wherein the circuitry for presenting is further for presenting to a user a form of the communication;
- The claimed and/or described communications system wherein the circuitry for presenting is further for presenting to a user a form of the communication;
- The claimed and/or described communications system wherein the communication is of a type selected from a set consisting of voice-over-IP, email, instant messaging, and text messaging;
- The claimed and/or described communications system wherein the circuitry for receiving and the circuitry for selectively locating are part of a device selected from a set consisting of a telephone, a personal digital assistant, a hybrid telephone/personal digital assistant, a computer, and an electronic handheld device;
- The claimed and/or described communications system and further comprising circuitry for disabling the circuitry for selectively locating elaborating information corresponding to content in the communication;
- The claimed and/or described communications system wherein the circuitry for selectively locating elaborating information corresponding to content in the communication comprises circuitry for searching for the elaborating information from resources over a network;
- The claimed and/or described communications system wherein the circuitry for selectively locating elaborating information selectively locates the elaborating information and retrieves it into a local storage prior to receipt of the communication;
- A communications system, comprising: circuitry for receiving a communication; circuitry responsive to the communication and for selectively locating elaborating information in response to a search using content in the communication; and circuitry for presenting to a user a form of the elaboration;
- The claimed and/or described communications system wherein the circuitry responsive to the communication and for selectively locating elaborating information comprises a user-programmable filter;
- The claimed and/or described communications system wherein the circuitry for selectively locating elaborating information corresponding to content in the communication comprises circuitry for searching for the elaborating information from resources over a network.

The preceding teachings demonstrate various benefits of the preferred embodiments to one skilled in the art. For example, the preferred embodiments provide improvements of the state of the art for communicating information and seeking additional elaboration on such information. As another example, the preferred embodiments may be readily implemented into various devices in contemporary and future technology. As still another example, the preferred embodiments may apply to numerous different types of electronically communicated communications. Indeed, as a final example, while the present embodiments have been described in detail, various substitutions, modifications or alterations could be made to the descriptions set forth above without departing from the inventive scope which is defined by the following claims.

## Claims

1. A communications system, comprising:
circuitry for receiving a communication;
circuitry responsive to the communication and for selectively locating elaborating information corresponding to content in the communication; and
circuitry for presenting to a user a form of the elaboration.

2. The communications system of claim 1 wherein the circuitry responsive to the communication and for selectively locating elaborating information comprises a user-programmable filter.

3. The communications system of claim 2 wherein the user-programmable filter is programmable such that subject matter programmed in the filter is excluded from causing selective location of the elaborating information.

4. The communications system of claim 2 wherein the user-programmable filter is programmable to include programmed subject to cause selective location of the elaborating information that corresponds to the programmed subject matter.

5. The communications system of claim 2 wherein the user-programmable filter is programmable in response to a user of the system single clicking on a displayed element corresponding to a portion of a received communication.

6. The communications system of claim 2 and further comprising:
circuitry for determining whether the communication is in a form that is capable of display; and
circuitry, responsive to the circuitry for determining making a determination that the communication is not in a form that is capable of display, for converting the communication into a form that is capable of display.

7. The communications system of claim 6 wherein the form that is capable of display comprises an image or alphanumeric data.

8. The communications system of claim 6:
wherein a communication in a form that is not capable of display comprises a speech communication; and
wherein the circuitry for converting comprises a speech recognizer.

9. The communications system of claim 6 wherein the communication is of a type selected from a set consisting of voice-over-IP, email, instant messaging, and text messaging.

10. The communications system of claim 6 wherein the circuitry for receiving and the circuitry for selectively locating are part of a device selected from a set consisting of a telephone, a personal digital assistant, a hybrid telephone/personal digital assistant, a computer, and an electronic handheld device.

11. The communications system of claim 6 and further comprising circuitry for disabling the circuitry for selectively locating elaborating information corresponding to content in the communication.

12. The communications system of claim 6 wherein the circuitry for selectively locating elaborating information corresponding to content in the communication comprises circuitry for searching for the elaborating information from resources over a network.
